# EUROPÄISCHE PATENTANMELDUNG

(11) **EP 0 770 942 A2**
(43) Veröffentlichungstag der Anmeldung: **02.05.1997**
(21) Anmeldenummer: 96117060.2
(22) Anmeldetag: 24.10.1996
(51) Int. Cl.: G05B 19/418

(54) **Anordnung zur Erfassung und/oder Verarbeitung von Signalen elektrischer Bauteile, die sicherheitstechnische Zwecke oder Auflagen für Geräte oder Anlagen erfüllen**

(30) Priorität: 27.10.1995 DE 19540069
(71) Anmelder: Elan Schaltelemente GmbH, D-35435 Wettenberg (DE)
(72) Erfinder: Kramer, Manfred, 35396 Giessen (DE); Adams, Friedrich, 35435 Wettenberg (DE)
(74) Vertreter: Stoffregen, Hans-Herbert, Dr. Dipl.-Phys.

(57) **Zusammenfassung**

Gegenstand der Erfindung ist eine Anordnung zur Erfassung und/oder Verarbeitung von Signalen elektrischer Bauteile, die für sich oder zusätzlich sicherheitstechnische Zwecke oder Auflagen von Geräten oder Anlagen erfüllen. Die Bauteile (10, 12, 14, 16; 54, 56, 58) sind jeweils mit wenigstens zwei Modulen (22, 30; 24, 32; 26, 34; 28, 36) verbunden, deren Anzahl der durch die Verbindungen zu den Modulen hergestellten Zuordnung der Module (22, 30; 24, 32; 26, 34; 28, 36) zu den Bauteilen entspricht. Die Module sind Teilnehmer im jeweiligen BUS, der ein zentrales BUS-Steuermodul (42, 44) enthält. Die BUS-Steuermodule (42, 44) sind mit wenigstens einem Vergleicher (50) und/oder einer Prüfeinrichtung für auf den BUSSEN (18, 20) übertragene Signale verbunden. Der Vergleicher (50) und/oder die Prüfeinrichtung steuert Bauelemente, durch deren Betätigung die Geräte oder Anlagen in einen Zustand versetzt werden, der wenigstens einer Sicherheitsvorgabe entspricht.

## Beschreibung

Die Erfindung bezieht sich auf eine Anordnung zur Erfassung und/oder Verarbeitung von Signalen elektrischer Bauteile, die sicherheitstechnische Zwecke oder Auflagen für Geräte oder Anlagen erfüllen.

Falls Ausfälle oder Störungen in der elektrischen Ausrüstung von Maschinen, Fertigungsanlagen u.ä. einen gefährlichen Zustand für Personen oder einen Schaden an der Maschine oder am Arbeitsgut verursachen können, müssen geeignete Maßnahmen getroffen werden, um gefährliche Zustände zu vermeiden bzw. schnell zu beseitigen.

Anforderungen, die für bestimmte Sicherheitskriterien erfüllt sein müssen, ergeben sich z.B. aus der die EG-Maschinen-Richtlinie intepretierende harmonisierte Europanorm EN 60204-1 "Elektrische Ausrüstung von Maschinen - Allgemeine Anforderungen" Ziffer 9.4. Hiernach wird gefordert, daß Steuerstromkreise in Abhängigkeit von den Risiken beim Betrieb derartiger Ausrüstungen unterschiedlich auszugestalten sind.

Die erforderlichen zusätzlichen sicherheitstechnischen Maßnahmen reichen - je nach Risikohöhe - von einfachen Anforderungen, z.B. die Verwendung sicherheitstechnisch bewährter Bauteile und Prinzipien, bis hin zu aufwendigen Anforderungen, wie Testung, Einfehlersicherheit/Redundanz oder Selbstüberwachung.

Gegenstand der sicherheitstechnischen Betrachtung sind dabei alle involvierten Funktionsgruppen eines solchen Stromsteuerkreises (nachfolgend auch als Sicherheitsstromkreise bezeichnet), die aus
- Signalgebern (z.B. die Verriegelungseinrichtung zur Stellungsüberwachung einer beweglichen Schutzeinrichtung),
- einer Auswerte- und Steuerebene, die den Signalzustand der Signalgeber empfängt, gegebebenenfalls verstärkt, überwacht und zu einem Steuerbefehl verarbeitet,
- sowie der Signalübertragung zwischen dem Signalgeber einerseits und Auswerte- und Steuerebene andererseits,
bestehen.
- Die Auswerte- und Steuerebene dient dabei als sogenannte Vorsteuerebene, die der sicheren Kontaktvervielfältigung von sicherheitsgerichteten Steuerbefehlen in der weiteren Betriebssteuerung dient. Stand der Technik sind hierfür Hilfsschütz-Sicherheits- und/oder Relais-Sicherheits-Kombinationen mit zwangsgeführten Kontakten.
- Testung bedeutet, daß die Sicherheitsfunktion in angemessenen Abständen willensunabhängig durch die Auswerte- und Steuerebene getestet wird.
- Einfehlersicherheit/Redundanz bedeutet, daß ein einzelner Fehler nicht zum Verlust der Sicherheitsfunktion führen darf und - wann immer möglich - der einzelne Fehler mit geeigneten Maßnahmen durch die Auswerte- und Steuerebene erkannt werden muß.
- Selbstüberwachung bedeutet, daß ein einzelner Fehler nicht zum Verlust der Sicherheitsfunktion führen darf und daß ein einzelner Fehler durch die Auswerte- und Steuerebene erkannt werden muß. Falls dies jedoch nicht möglich ist, darf eine Anhäufung von Fehlern ebenfalls nicht zum Verlust der Sicherheitsfunktion führen.

Die Signalübertragung in solchen Sicherheitsstromkreisen erfolgt nach dem mittels diskreter Verdrahtung, d.h. die Signalgeber einerseits und die Auswerte- und Steuerebene andererseits werden mittels Zuleitungen in Parallel- oder Reihenschaltungen miteinander verbunden.

Die Datenverarbeitung und Datenübertragung im industriellen Bereich, die nicht besonderen Sicherheitskriterien unterliegt, wird vielfach zwischen datenverarbeitenden Geräten vernetzt ausgeführt.

Hierfür werden dann sogenannte BUS-Systeme eingesetzt, die parallele Leitungen mit gleichartigem Informationsgehalt, an die sämtliche Systemkomponenten angeschlossen sind, in einer Zweidrahtleitung zusammenfassen.

Die Vernetzungstechnik über ein BUS-System bietet zum einen erhebliche Kostenvorteile gegenüber konventioneller Verdrahtungstechnik, zum anderen eine vorher überhaupt nicht mögliche Vielfalt an zentralen Informationen und Flexibilität.

Die Datenverarbeitung sicherheitsrelevanter bzw. sicherheitsgerichteter Signale erfolgt insbesondere dann, wenn sie dem Personenschutz z.B. im Wirkbereich einer Maschine dient, im Regelfall noch in konventioneller Verdrahtungstechnik.

Der Grund dafür ist, daß handelsübliche BUS-Systeme im Sinne des geltenden gesetzlichen und/oder technischen Regelwerks nicht fehlersicher bzw. fehlertolerant arbeiten.

Ausdrücklich wird der Einsatz handelsüblicher BUS-Systeme in NOT-AUS-Sicherheitsstromkreisen sogar ausgeschlossen, in dem es gemäß Ziffer 9.2.5.4. in EN 60204-1 sogar heißt: "Die Auslösung darf nicht.... von der Übertragung von Befehlen über ein Kommunikationsnetzwerk oder eine Datenverbindung abhängen."

Die generelle Skepsis gegenüber der Fähigkeit programmierbarer elektronischer Systeme, d.h. also auch von BUS-Systemen, die geforderte Fehlersicherheit bzw. Fehlertoleranz zu gewährleisten, manifestiert sich auch in einer EN 60204-1-Anmerkung: "Derzeit ist man der Auffassung, daß es schwierig ist, sicher festzustellen, daß in Situationen, in denen eine bedeutsame Gefahr duch Fehlbetrieb des Steuersystems entstehen kann, die Zuverlässigkeit des fehlerfreien Betriebs eines einzelnen Kanals der programmierbaren elektronischen Ausrüstung zugesichert werden kann. Bis zu dem Zeitpunkt, an dem diese Situation geKlärt werden kann, ist es nicht ratsam, sich allein auf den fehlerfreien Betrieb einer solchen Einkanal-Steuerung zu verlassen."

Der Erfindung liegt das Problem zugrunde, eine Anordnung zur Erfassung und/oder Verarbeitung von Signalen elektrischer Bauteile, die sicherheitstechnische Zwecke oder Auflagen von Geräten oder Anlagen erfüllen, zu entwickeln, die mit einem geringen Aufwand an Leitungen auskommt und deren Zustand einfacher zu überprüfen ist.

Die Aufabe wird erfindungsgemäß dadurch gelöst, daß die Bauteile jeweils mit wenigstens zwei Modulen in verschiedenen BUSSEN verbunden sind, deren Anzahl der durch die Verbindungen zu den Modulen hergestellten Zuordnung der Module zu den Bauteilen entspricht, daß die Module Teilnehmer im jeweiligen BUS sind, der ein zentrales BUS-Steuermodul enthält, daß die BUS-Steuermodule wenigstens mit einem Vergleicher und/oder einer Prüfeinrichtung für auf den BUSSEN übertragene Signale verbunden sind, und daß der Vergleicher und/oder die Prüfeinrichtung Bauelemente steuert, durch deren Betätigung die Geräte oder Anlagen in einen Zustand versetzt werden, der wenigstens einer Sicherheitsvorgabe entspricht.

Bei dieser Anordnung lassen sich im Vergleich zu traditionellen Parallelschaltungen die Verdrahtungskosten von Sicherheitsstromkreisen, z.B. durch den Aufbau von Stern- oder Ringstrukturen, erheblich reduzieren und im Vergleich zu traditionellen Parallelschaltungen und insbesondere zu Reihenschaltungen die Diagnosefähigkeit und damit die Servicefreundlichkeit zugunsten verbesserter Standzeiten erheblich verbessern, weil der Zustand sämtlicher Systemkomponenten im einzelnen transparent ist. Änderungen und/oder Ausbauoptionen lassen sich wesentlich flexibler realisieren. Es kann durch zusätzliche Abfragen der Sicherheitsstandard erhöht werden. Vorzugsweise sind die BUSSE seriell ausgebildet.

Mit der vorliegenden Erfindung können auch handelsübliche BUS-Systeme für die Datenverarbeitung sicherheitsgerichteter Signale eingesetzt werden. Die Möglichkeit herkömmliche BUS-Systeme bei Sicherheitsschaltungen einsetzen zu können, wird bei der vorliegenden Erfindung im Prinzip dadurch erreicht, daß in der Eingangsebene der Auswerte- und Steuer- ebene einer Sicherheitsschaltung Netzwerk-Schnittstellen für ein oder mehrere - gegebenenfalls unterschiedliche - BUS-Systeme, realisiert sind.

Je nach BUS-Konfiguration wird von hier das Netzwerk-Management betrieben bzw. eine zentrale BUS-Steuerung ausgeführt. Die sicherheitsbezogenen Teile der BUS-Telegramme über den Zustand des bzw. der Signalgeber werden vom BUS-Master oder BUS-Manager in ein logisches H- oder L-Signal umgewandelt und zur sicherheitsgerichteten Weiterverarbeitung auf die Teststufe oder den Vergleicher übertragen.

Bei der bevorzugten Ausführungsform ist der jeweilige BUS ein ASI(Aktor-Sensor-Interface)-BUS. Ein derartiger BUS ist bekannt. Dieser Sensor/Aktor-BUS hat einen offenen Standard, wobei der BUS-Master durch Polling (zyklische Abfrage der Teilnehmer) die Eingangszustände erfaßt bzw. Ausgänge schaltet. Die Slavebaugruppen bzw. -module lassen sich kostengünstig realisieren.

Bei einer anderen günstigen Ausführungsform ist der BUS ein Inter-BUS. Dieser an sich bekannte BUS hat einen offenen Standard, bei dem die durch einen BUS-Master erzeugten Taktsignale die Daten seriell durch alle Teilnehmer takten. Am Ende eines jeden Taktzyklus stehen daher die Daten aller Teilnehmer zur Verfügung. Über einen vom BUS-Master eingeleiteten Identifikationszyklus wird die Systemkonfuguration ermittelt. Durch zyklisch eingeleitete Identifikationszyklen werden Fehler erkannt und Steuerinformationen übertragen.

Bei einer weiteren bevorzugten Ausführungsform ist der jeweilige BUS an eine galvanisch getrennte Schnittstelle angeschlossen über die Daten an eine Betriebssteuerung übertragbar sind. Insbesondere ist die Schnittstelle durch Slave-Module beim ASI-BUS realisiert.

Bei der erfindungsgemäßen Schaltungsanordnung wird die Sicherheitsfunktion bei aufwendigeren Anforderungen in hohem Maße der den BUSSEN nachgeschalteten Anordnung, d.h. der Auswerte- und Steuerebene übertragen, während für die Signalgeber und die Signalübertragung selbst kaum besondere Anforderungen gemacht werden, außer daß dabei bewährte Bauteile und/oder Sicherheitsprinzipien beachtet werden sollen. Bei den oben beschriebenen Anordnungen stellt die Auswerte- und Steuerebene diese Fehler - je nach Risikohöhe - spätestens beim nächsten Wiederanlauf fest (Testung) oder toleriert sie (Einfehlersicherheit/Redundanz bzw. Selbstüberwachung).

Bei den üblichen Sicherheitsschaltungen ist die Eingangsebene der Auswerte- und Steuerebene so gestaltet, daß der Zustand der Signalgeber nur mittels eines binären Signals pro Eingangskanal (H:L, Stromkreise geschlossen : Stromkreise geöffnet o.ä.) weiterverarbeitet werden kann, in dem diese binären Signale von ein oder zwei oder mehr Kanälen auf eine Teststufe und/oder einen Vergleicher geführt werden. Im Falle der gewünschten logischen Übereinstimmung (valent : antivalent : Auswahlschaltung zwei von drei oder ähnlich) wird dann ein Steuerbefehl erzeugt.

Eine Teststufe und/oder ein fehlersicherer Vergleicher ist nach dem derzeitigen Stand der Technik so ausgeführt, daß Schaltgeräte, wie z.B. Relais oder Schütze mit zwangsgeführten Kontakten wirken, um über deren sicherheitstechnisches Merkmal der Zwangsführung etwaige interne Fehler im Sicherheitsstromkreis mit der Folge einer Betriebshemmung zu erkennen.

Um erfindungsgemäß die Fehlereffektanalyse bzw. die sicherheitstechnische Betrachtung beherrschbar zu machen, werden zwar handelsübliche bewährte BUS-Systeme vorgesehen, die jedoch vom betriebsmäßien BUS-System strikt getrennt aufgebaut und die ausschließlich von der Auswerte- und Steuerebene im Sicherheitsstromkreis betrieben werden, d.h. es werden völlig unabhängige Netzwerke aufgebaut.

Dies hat mehrere Vorteile:
- Etwaige Einwirkungen durch hardware- und/oder software-mäßige Fehler des betriebsmäßigen BUS-Systems auf den Sicherheitsstromkreis können weitestgehend ausgeschlossen werden und damit aufwendige Fehlereffektanalysen und daraus resultierende zusätzliche Maßnahmen.
- Sicherheitsbedenkliche Fragen zur Übertragungsgeschwindigkeit sicherheitsgerichteter Signale in betriebsmäßigen BUS-Systemen, in die sich diese Signale
- in welcher Form auch immer - "einzureihen" hätten bzw. sicherheitsbedenkliche Fragen von - möglicherweise potentiell fehlerbehafteten - Prioritätsbildungen in betriebsmäßigen BUS-Systemen zu gunsten sicherheitsgerichteter Signale können vernachlässigt werden bzw. sie stellen sich erst gar nicht.
- Erforderliche zusätzliche sicherheitsgerichtete hardware- und/oder softwaremäßige Maßnahmen können in separaten BUS-Systemen ohne weiteres realisiert werden, ohne daß dabei Rückkopplungen auf das betriebsmäßige BUS-System und/oder die anderen Teile der Maschinensteuerung betrachtet werden müssen.
- Ein Prinzip der Erfindung besteht auch darin, daß ein oder mehrere sicherheitsgerichtete Signalgeber, die mit je einer zusätzlichen BUS-Schnittstelle eines handelsüblichen BUS-Systems ausgestattet sind, ein von der betriebsmäßigen Datenverarbeitung unabhängiges Netzwerk bilden, dessen Sicherheitsfunktion von der Auswerte- und Steuerebene fortlaufend oder in angemessenen zeitlichen Abständen willensunabhängig getestet wird.

Weitere Einzelheiten, Merkmale und Vorteile der Erfindung ergeben sich nicht nur aus den Ansprüchen und den diesen zu entnehmenden Merkmalen - für sich und/oder in Kombination -, sondern auch aus der folgenden Beschreibung bevorzugter Ausführungsbeispiele.

Es zeigen:

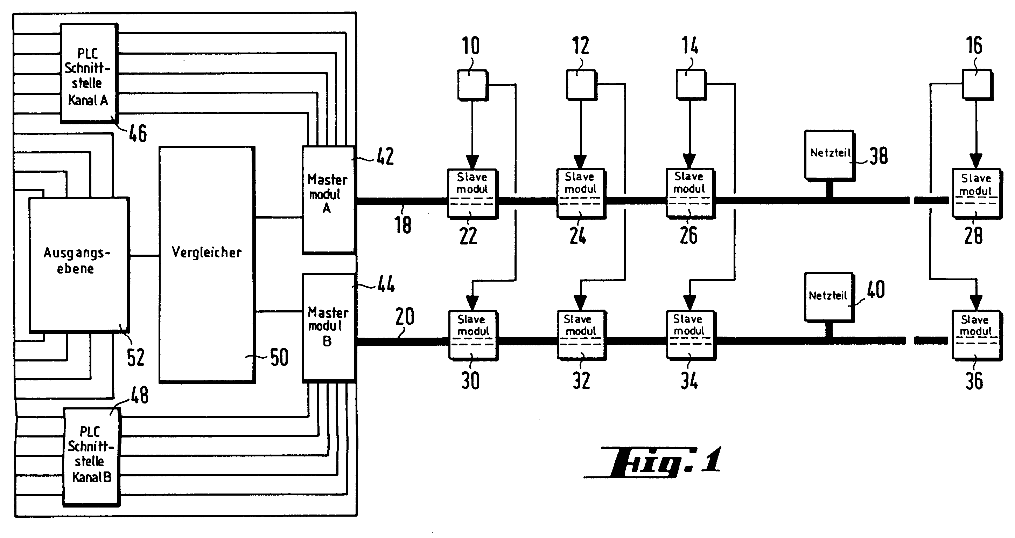

- Fig. 1: eine Anordnung zur Erfassung und/oder Verarbeitung von Signalen elektrischer Bauteile, die sicherheitstechnische Zwecke oder Auflagen von Geräten oder Anlagen erfüllen, im Blockschaltbild und
- Fig. 2: eine andere Anordnung zur Erfassung und/oder Verarbeitung von Signalen elektrischer Bauteile, die sicherheitstechnische Zwecke oder Auflagen von Geräten oder Anlagen erfüllen, im Blockschaltbild.

In oder an einem technischen Gerät sind elektrische Bauteile (10), (12), (14), (16) vorhanden, die für die Erfüllung bestimmter Sicherheitsauflagen vorgesehen sind. Es kann sich bei diesen Bauteilen, die im folgenden auch als Signalgeber bezeichnet werden, um Not-Aus-Schalter, Stop-Schalter, Positions-Schalter und die Ansteuerung von Türzuhaltungen bei einer elektrischen Maschine, wie Presse usw. handeln.

Jedem Bauteil (10), (12), (14), (16) ist ein Modul in einem ersten BUS (18) und ein Modul in einem zweiten BUS (20) zugeordnet. Im BUS (18) sind diese Module (22), (24), (26), (28) jeweils mit den Bauteilen (10), (12), (14), (16) verbunden. im BUS (20) sind die Module (30), (32), (34), (36) jeweils mit den Bauteilen (10), (12), (14), (16) verbunden. Die Module (22) bis (26) und (30) bis (36) sind jeweils Teilnehmer im zugehörigen BUS (18) bzw. (20). Die zueinander unabhängigen BUSSE (18), (20) werden von getrennten Netzteilen (38), (40) mit Energie, d.h. der notwendigen Betriebsspannung versorgt. Bei Betätigung des jeweiligen Bauteils (10), (12), (14), (16) werden gleiche Signale an die zugeordneten Module (22), (30) bzw. (24), (32) bzw. (26), (34) bzw. (28), (36) abgegeben. Die Module (22) bis (28) und (30) bis (36) verarbeiten die Signale der zugeordneten Bauteile und leiten sie auf eine Abfrage hin jeweils zu BUS-Steuermodulen (42), (44), die als BUS-Master ausgebildet sind, während die Module (22 - 28) und (30 - 36) Slave-Module am BUS sind.

Die beiden BUSSE (18), (20) können jeweils ASI(Aktor-Sensor-Interface)-BUSSE sein, die an sich bekannt sind. Es handelt sich um BUSSE mit offenem Standard, bei denen die BUS-Steuermodule (42), (44) jeweils durch Polling die Eingangszustände in den Slave-Modulen abfragen bzw. über die Slave-Module Ausgänge schalten.

Die BUS-Steuermodule (42), (44) sind jeweils mit Schnittstellen (46), (48) für die Verbindung mit programmierbaren Steuergeräten oder Prozeßrechnern versehen, die nicht näher dargestellt sind.

Weiterhin sind die BUS-Steuermodule (42), (44) gemeinsam je an Eingänge eines Vergleichers (50) angeschlossen, der eine mit Ausgangsebene (52) bezeichnete Einheit steuert, die insbesondere Relais oder Schütze aufweist, die in der Stromzuleitung des jeweiligen elektrischen Gerätes bzw. der Maschine angeordnet sind und bei Ansteuerung durch den Vergleicher (50) die Energiezufuhr unterbrechen. Die Bauteile (10 - 16) sind sicherheitsgerichtete Signalgeber, die über eine Schnittstelle je mit zwei handelsüblichen BUS-Systemen verbunden sind, die ein von der betriebsmäßigen Datenverarbeitung des elektrischen Geräts unabhängiges Netzwerk bilden, dessen Sicherheitsfunktion von der Auswerte- und Steuerebene, die vom Vergleicher (50) und der Ausgangsebene (52) gebildet wird, auf partielle Einfehlersicherheit/Redundanz überwacht wird.

Die BUS-Steuermodule (42), (44) fragen zyklisch die von den Modulen (22 - 28) und (30 - 36) erfaßten Signale der zugeordneten Signalgeber ab und führen die Signale dem Vergleicher (50) zu, der bei Ungleichheit die Energiezufuhr des zugeordneten Geräts bzw. der Maschine abschaltet und eine Meldung erzeugt.

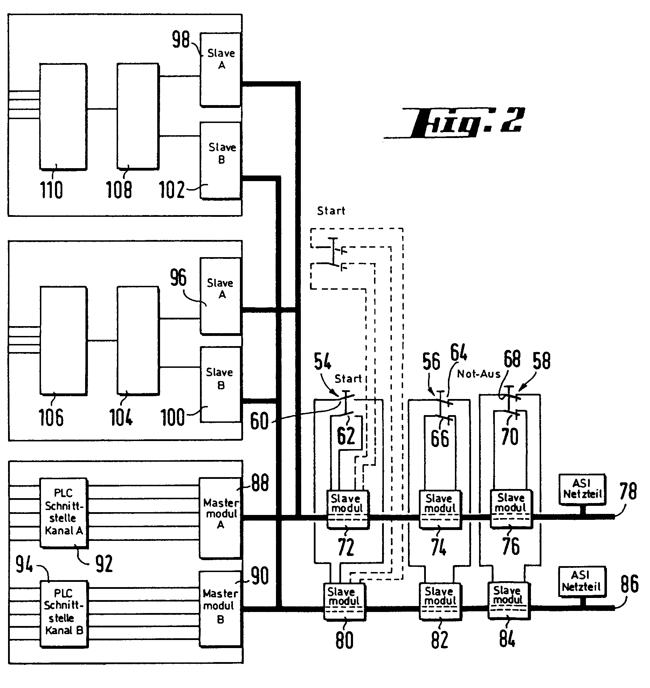

Die Fig. 2 zeigt eine andere Anordnung mit Bauteilen bzw. Signalgebern wie einem Start-Schalter (54) und zwei Not-Aus-Schaltern (56), (58) einer elektrischen Maschine. Der Start-Schalter (54) und die Not-Aus-Schalter (56), (58) haben mindestens verdoppelte, d.h. redundant aufgebaute Kontaktgeber (60), (62) bzw. (64), (66) bzw. (68), (70), die jeweils gemeinsam betätigt werden.

Die Kontaktgeber (60), (64), (68) sind jeweils mit Modulen (72), (74), (76) eines ersten BUSSES (78) verbunden. Die Kontaktgeber (62), (66), (70) sind jeweis mit Modulen (80), (82), (84) eins zweiten BUSSES (86) verbunden. Die BUSSE (78), (86) haben wiederum eigenständige, nicht näher bezeichnete Betriebsspannungsversorgungen. Jeder BUS (78) bzw. (86) ist mit einem eigenen BUS-Steuermodul (88), (90) verbunden, das den BUS-Master bildet, während die Module (72), (74), (76), (78), (80), (82), (84) Slave-Module zum Beispiel eines ASI-BUSSES sind. Die BUS-Steuermodule (88), (90) sind je mit einer Schnittstelle (92), (94) für die Verbindung zu einem programmierbaren Steuergerät oder Prozeßleitrechner verbunden, von dem insbesondere die Maschinenabläufe gesteuert werden.

An den BUS (78) sind zwei weitere Module (96), (98) angeschlossen. In entsprechender Weise sind an den anderen BUS (86) zwei weitere Module (100), (102) angeschlossen. Die Module (96), (100) sind ausgangsseitig mit einem Vergleicher (104) verbunden, dem eine Ausgangsebene (106) nachgeschaltet ist. Die Module (98), (102) sind ausgangsseitig mit einem Vergleicher (108) verbunden, dem eine Ausgangsebene (110) nachgeschaltet ist. Die Ausgangsebenen (106), (110) enthalten Betätigungsglieder, z.B. Schaltelemente zum Ein- und Ausschalten der Energiezufuhr zum Gerät bzw. zur zugeordneten Maschine. Die Signalgeber wie der Start-Schalter (54) und die Not-Aus-Schalter (56), (58) sind verdoppelt ausgebildet, können aber auch mehr als zwei Schaltglieder aufweisen, wofür dann eine entsprechende Zahl von unabhängigen BUSSEN vorgesehen wird, die insbesondere handelsübliche, z.B. ASI-BUSSE oder Inter-BUSSE sind. Die BUSSE (78), (86) bilden separate, von der betriebsmäßigen Datenverarbeitung durch die nicht dargestellten programmierbaren Steuergeräte oder Prozeßrechner unabhängige Netzwerke, deren Sicherheitsfunktion von der die Module (96), (100) den Vergleicher (104) und die Ausgangsebene (106) enthaltenden Auswerte- und Steuerebene auf Einfehlersicherheit/Redundanz bzw. Selbstüberwachung überwacht wird.

Auch die Auswerte- und Steuerebene, die die Module (98), (102), den Vergleicher (108) und die Ausgangsebene (110) enthält, überwacht die beiden voneinander unabhängigen BUSSE (78), (86). Auf diese Weise wird in bezug auf die Auswerte- und Steuerebene eine doppelte Redundanz erreicht. Es ist möglich, die Auswerte- und Steuerebene mit einer galvanischen Trennung gegenüber den BUSSEN (78), (86) zu versehen.

Statt oder zusätzlich zu den Vergleichern (50), (104), (108) können auch Teststufen vorgesehen sein, mit denen die BUSSE (18), (20), (78), (86) und ihre Module auf einwandfreie Funktion überprüft werden.

Die Vergleicher (50), (104), (108) sind insbesondere in kontaktbehafteter Logik, d.h. mit Relais oder Schützen mit zwangsgeführten Kontakten ausgebildet. Es sind aber auch Vergleicher und Teststufen in anderer, fehlerischer Ausführung möglich.

Die Bauteile (10) bis (16) bzw. die Schalter (54), (56), (58) erhalten ihre Funktionen als Stop-, Not-Aus-Schalter oder Türzuhaltungen durch Programmierung der zugeordneten Slave-Module. Die Programmierung kann bei entsprechender Modul-Ausbildung durch Jumper-Brücken, DIP-Schalter bzw. bestimmte Adressen festgelegt werden.

Die Schnittstellen (46), (48), (92), (94) sind parallele Schnittstellen, an die, wie oben erwähnt, programmierbare Steuergeräte oder auch Prozeßleitcomputer angeschlossen werden können. Damit ist es möglich die Signale der Eingänge der Slave-Module abzufragen.

## Patentansprüche

1. Anordnung zur Erfassung und/oder Verarbeitung von Signalen elektrischer Bauteile, die sicherheitstechnische Zwecke oder Auflagen für Geräte oder Anlagen erfüllen,
**dadurch gekennzeichnet**,
daß die Bauteile (10, 12, 14, 16; 54, 56, 58) jeweils mit wenigstens zwei Modulen (22, 30; 24, 32; 26, 34; 28, 36; 72, 80; 74, 82; 76, 84) in verschiedenen BUSSEN (18, 20; 78, 86) verbunden sind, deren Anzahl der durch die Verbindungen zu den Modulen hergestellten Zuordnung der Module (22, 30; 24, 32; 26,34; 28, 36; 72, 80; 74, 82; 76, 84) zu den Bauteilen (10, 12, 14, 16; 54, 56, 58) entspricht, daß die Module Teilnehmer im jeweiligen BUS (18, 20; 78, 86) sind, der ein zentrales BUS-Steuermodul (42, 44; 88, 90) enthält, daß die BUS-Steuermodule (42, 44; 88, 90) wenigstens mit einem Vergleicher (50; 104, 108) und/oder einer Prüfeinrichtung für auf den BUSSEN (18, 20, 78, 86) übertragene Signale verbunden sind und daß der Vergleicher (50, 104, 108) und/oder die Prüfeinrichtung Bauelemente steuert, durch deren Betätigung die Geräte oder Anlagen in einen Zustand versetzt werden, der wenigstens einer Sicherheitsvorgabe entspricht.

2. Anordnung nach Anspruch 1,
**dadurch gekennzeichnet**,
daß die BUSSE (18, 20; 78, 86) seriell ausgebildet sind.

3. Anordnung nach Anspruch 1 oder 2,
**dadurch gekennzeichnet**,
daß der jeweilige BUS (18, 20, 78, 86) ein ASI(Aktor-Sensor-Interface)-BUS ist.

4. Anordnung nach Anspruch 1 oder 2,
**dadurch gekennzeichnet**,
daß der jeweilige BUS (18, 20, 78, 86) ein Inter-.BUS ist.

5. Anordnung nach einem oder mehreren der vorhergehenden Ansprüche,
**dadurch gekennzeichnet**,
daß der jeweilige BUS (78, 86) an eine galvanisch getrennte Schnittstelle angeschlossen ist, über die Daten an eine Betriebssteuerung übertragbar sind.

6. Anordnung nach einem oder mehreren der vorhergehenden Ansprüche,
**dadurch gekennzeichnet**,
daß an an wenigstens zwei BUSSEN (78, 86), deren Teilnehmer paarweise je mit einem Bauteil (54, 56, 58) verbunden sind, jeweils weitere Module (96, 100; 98, 102) angeschlossen sind, und daß jeweils zwei dieser in verschiedenen BUSSEN (78, 86) angeordneten Module (96, 100; 98, 102) ausgangsseitig an je einen Vergleicher (104; 108) und/oder eine Prüfeinrichtung angeschlossen sind, denen die Bauelemente zur Unterbrechung der Energiezufuhr für das Gerät oder die Anlage nachgeschaltet sind.

7. Anordnung nach einem oder mehreren der vorhergehenden Ansprüche,
**dadurch gekennzeichnet**,
daß die Bauteile (10, 12, 14, 16; 54, 56, 58) jeweils wenigstens mit zwei getrennten durch zwangsläufige Kopplung gemeinsam betätigbaren Kontaktgebern (60, 62; 64, 66; 68, 70) versehen sind, die an die Module (72, 80; 74, 82; 76, 84) in den verschiedenen BUSSEN (78, 86) angeschlossen sind.

8. Anordnung nach einem oder mehreren der vorhergehenden Ansprüche,
**dadurch gekennzeichnet**,
daß die Vergleicher (50, 104, 108) jeweils Relais enthalten, die zwangsgeführte Kontakte aufweisen.

9. Anordnung nach einem oder mehreren der vorhergehenden Ansprüche,
**dadurch gekennzeichnet**,
daß die BUS-Steuermodule (42, 44; 88, 90) jeweils eine Schnittstelle (46, 48; 92, 94) zum Anschluß an ein programmierbares Steuergerät oder einen Prozeßleitcomputer aufweisen.

10. Anordnung nach einem oder mehreren der vorhergehenden Ansprüche,
**dadurch gekennzeichnet**,
daß die Bauelemente (54, 56, 58) von Hand betätigbare Schalter und/oder Positionsschalter und/oder Türzuhaltungen sind.

11. Anordnung nach einem oder mehreren der vorhergehenden Ansprüche,
**dadurch gekennzeichnet**,
daß bei von den Vergleichern (50; 104; 108) und/oder den Prüfeinrichtungen erfaßten Fehlern eine Meldung erzeugt wird.

12. Anordnung zur Erfassung und/oder Verarbeitung von Signalen elektrischer Bauteile, die sicherheitstechnische Zwecke oder Auflagen für Geräte oder Anlagen erfüllen,
**dadurch gekennzeichnet**,
daß die Bauteile (10, 12, 14, 16; 54, 56, 58) jeweils mit wenigstens einem Modul (22, 30; 24, 32; 26, 34; 28, 36; 72, 80; 74, 82; 76, 84) eines BUSSES (18, 20; 78, 86) verbunden sind, der zumindest ein zentrales BUS-Steuermodul (42, 44; 88, 90) enthält, und daß das BUS-Steuermodul (42, 44; 88, 90) Signale generiert, die einen Vergleicher (50; 104, 108) und/oder eine Prüfeinrichtung steuern, durch deren Betätigung die Geräte oder Anlagen in einen Zustand versetzt werden, der wenigstens einer Sicherheitsvorgabe entspricht.

13. Anordnung nach Anspruch 12,
**dadurch gekennzeichnet**,
daß die Bauteile (10, 12, 14, 16; 54, 56, 58) jeweils mit wenigstens zwei Modulen (22, 30; 24, 32; 26, 34; 28, 36; 72, 80; 74, 82; 76, 84) in verschiedenen BUSSEN (18, 20; 78, 86) verbunden sind, der ein zentrales BUS-Steuermodul (42, 44; 88, 90) enthält, und daß die BUS-Steuermodule (42, 44; 88, 90) Signale generieren, die einen Vergleicher (50; 104, 108) und/oder eine Prüfeinrichtung steuern, durch deren Betätigung die Geräte oder Anlagen in einen Zustand versetzt werden, der wenigstens einer Sicherheitsvorgabe entspricht.
